# EUROPEAN PATENT APPLICATION

(11) **EP 4 369 268 A1**
(43) Date of publication of application: **15.05.2024**
(21) Application number: 22206192.1
(22) Date of filing: 08.11.2022
(51) Int. Cl.: G06Q 10/20

(54) **AUTOMATED ELECTRICAL PRODUCT MONITORING AND DISASSEMBLING SYSTEM**

(71) Applicant: Siemens Aktiengesellschaft, 80333 München (DE)
(72) Inventor: Moody, Robert, Knutsford, WA16 8DE (GB)
(74) Representative: Siemens Patent Attorneys

(57) **Abstract**

An automated industrial electrical product condition monitoring and disassembly system is described. The system comprises uses a digital twin of the industrial electrical product and determining the condition of the product and its components before generating executable code to run a robot or other flexible automation system to disassemble the industrial electrical product for reuse, recycling, refurbishment or disposal. The digital twin uses a combination of expected operational data and actual operational data for the industrial electrical product.

## Description

The present invention relates to an automated electrical product condition monitoring system and an automated method of disassembling an electrical product using the system.

Sustainability is of increasing focus in relation to both sourcing of and disposing of industrial electrical products. This broadly covers the environmental, economic and societal factors in materials usage, particularly around recycling and reuse of electronic materials and components. When an industrial electrical product, such as an electric motor, drive or controller approaches its end of life it is typically disposed of without any targeted disassembly or automated processing for reuse. This may be at e-waste facilities or even landfill. One exception to this is the Apple^{™} Material Recovery Lab, where the Daisy robot dismantles used Apple^{™} devices to recover components for materials recycling. However, such programs are not widespread, and at present cover only a small geographical area and product line.

Recent legislation in the European Union (Directive (EU) 2019/771) provides consumers with a right to repair during the guarantee period of a product, and forms part of the EU-wide drive for a circular economy and the use of repairable technologies. This will, over time, lead to an increase in demand for automated repair, disassembly for refurbishment or correct disposal of industrial electrical products. Individual components and entire products will need to be available for re-use, whether these are obtained from recyclers, waste companies or customers. Targeted disassembly would enable specific materials, such as plastics and metals/alloys, to be recycled and used in new components, as well as components to be maintained or refurbished for reuse.

Currently, no system exists that enables targeted disassembly of industrial electrical products such as motors, drives or controllers. Although automation using robots can be trained to disassemble small number of items (such as the Apple^{™} Daisy system), doing so for a wide variety of industrial electrical products has yet to be achieved. As a simple example, controllers may come in a wide variety of enclosures with slightly differing screw positions. In addition, such robots work on the principle that materials are recovered for recycling, whereas the condition of such materials or the components they are found in is not assessed. In other words, there is no provision to determine whether or not such materials or components could be re-used *as is,* or refurbished. There therefore exists a need, particularly for industrial electrical products, for automated industrial electrical product condition monitoring system and automated disassembly methods.

The present invention provides, in a first aspect, an automated industrial electrical product condition monitoring system, comprising; a data input device adapted to read a digital identity credential affixed to an industrial electrical product; a data store containing status information for the industrial electrical product; an inspection device adapted to obtain data from the industrial electrical product relating to measurements of physical characteristics indicating the operating history and current function of the industrial electrical product; a processor adapted to identify the industrial electrical product based on the digital identity credential read by the data input device; to search for status information relating to the industrial electrical product and to retrieve the status information for further processing, and to simulate the industrial electrical product based on the status information and the data relating to the measured physical characteristics; and a data output device adapted to output a condition from the simulation of the industrial electrical product to a pre-determined destination.

By combining information regarding the expected operation lifetime and actual operating conditions in a digital twin of the industrial electrical product, the condition of the industrial electrical product and its components can be simulated accurately to enable efficient automated disassembly of the industrial electrical product optimised around economic and environmental factors.

Preferably, the data input device is a vision inspection system. The data input device and the inspection device may be combined in the vision inspection system. Alternatively, the inspection device may be adapted to digitally interrogate software stored in the industrial electrical product.

Preferably, the data store is a database located remote from the industrial electrical product in which status data relating to a plurality of industrial digital products is stored by digital identity credential.

Alternatively, the data store is located within the industrial electrical product and wherein the inspection device is further adapted to read the data store.

Preferably, the processor is adapted to use a digital twin of the industrial electrical product to simulate the condition of the industrial electrical product.

Preferably, the status information comprises at least one of: the expected lifetime of the components of the industrial electrical product, bill of materials information for components of the industrial electrical product, computer-aided models of the industrial electrical product, details of expected component, material and product lifetimes, and allowed limits of wear and component age.

Preferably, the data indicating the operating history and current function of the industrial electrical product comprises at least one of: information on the runtime of the components within the industrial electrical product, operating temperatures, humidity of the operating environment, exposure to magnetic or electric fields or radiation, impact or other external forces, data regarding operation of individual components, errors, fault codes, and restarts.

The present invention also provides, in a second aspect, an automated industrial electrical product disassembly system comprising the automated industrial electrical product condition monitoring system outlined above and a flexible automation system adapted to be programmed to disassemble the industrial electrical product based on the condition of the industrial electrical product.

The present invention also provides, in a third aspect, an automated method of disassembling an industrial electrical product, comprising: a) reading a digital identity credential affixed to an industrial electrical product; b) inspecting the industrial electrical product to obtain data relating to measurements of physical characteristics indicating the operating history and current function of the industrial electrical product; c) identifying, from a data store, the industrial electrical product based on the digital identity credential; searching for status information relating to the industrial electrical product and retrieving the status information for further processing; d) simulating, based on the status information and the data relating to measurements of physical characteristics indicating the operating history and current function of the industrial electrical product, the industrial electrical product; e) outputting a condition of the industrial electrical product based on the simulation to a user display device and a flexible automation system; and f) disassembling the industrial electrical product using the flexible automation system.

Preferably, the step of simulating comprises using a digital twin of the industrial electrical product.

Preferably, the condition of the industrial electrical product comprises, for each component of the industrial electrical product: i) an estimated component lifespan; ii) an indicator of the reusability of the component; and iii) an indicator of the recyclability of the component; and preferably the condition of the industrial electrical product further comprises a list of disassembly steps to be carried out by the flexible automation system and computer code to be executed to enable the flexible automation system to carry out the disassembly steps.

The method may further comprise the step of displaying a computer-aided model of the industrial electrical product on the user display and animating the model to match the disassembly steps being carried out by the flexible automation system.

Preferably, the step of identifying the industrial electrical product based on the digital identity credential comprises either: i) searching a database located remote from the industrial electrical product in which status data relating to a plurality of industrial digital products is stored by digital identity credential; or ii) reading a data store located within the industrial electrical product.

The present invention will now be described by way of example only, and with reference to the accompanying drawings, in which:
Figure 1 is a schematic diagram of an automated industrial electrical product condition monitoring system in accordance with embodiments of the present invention;
Figure 2 is a schematic illustration of an automated industrial electrical product disassembly system in accordance with the embodiments of the present invention;
Figure 3 is a flowchart outlining the steps in a method in accordance with the embodiments of the present invention;
Figure 4 is a photograph of an automated industrial electrical product disassembly system in accordance with the embodiments of the present invention;
Figure 5 is a screenshot showing the initial reading of the digital identity credential;
Figures 6a and 6b are screenshots of the visual inspection of component presence;
Figures 7a and 7b are screenshots of the visual inspection of component damage;
Figure 8 is a first screenshot of a user interface generated by the embodiments of the present invention;
Figure 9 is a second screenshot of a user interface generated by the embodiments of the present invention; and
Figure 10 is a third screenshot of a user interface generated by the embodiments of the present invention.

The embodiments of the present invention take the approach that the foundation to an automated targeted disassembly system is an automated industrial electrical product condition monitoring system. This comprises a number of components, including a data input device that is adapted to read a digital identity credential affixed to an industrial electrical product. Such a digital identity credential effectively acts as a "digital passport", enabling access to data about the industrial electrical product it is affixed to. This data is stored in a database that contains status information for industrial electrical products stored by the digital identity credential. The status information includes information derived from a PLM (product lifecycle management) database and product information based on the digital identity credential. In order to obtain data relating to measurements of physical characteristics indicating the operating history and current function of the industrial electrical product, an inspection device is included. A processor is adapted to identify the industrial electrical product based on the digital identity credential read by the data input device and to search for status information matching the industrial electrical within the database that is then retrieved for further processing. The processor also simulates the industrial electrical product based on the status information retrieved from the database and the data relating to physical characteristics obtained from by inspection device. A data output device is used to output a condition of the industrial electrical product based on the simulation to a pre-determined destination. This destination may be a user display, a robot or both, depending on the next stage of any disassembly method the automated industrial electrical product condition monitoring system is used in. This is described in more detail below.

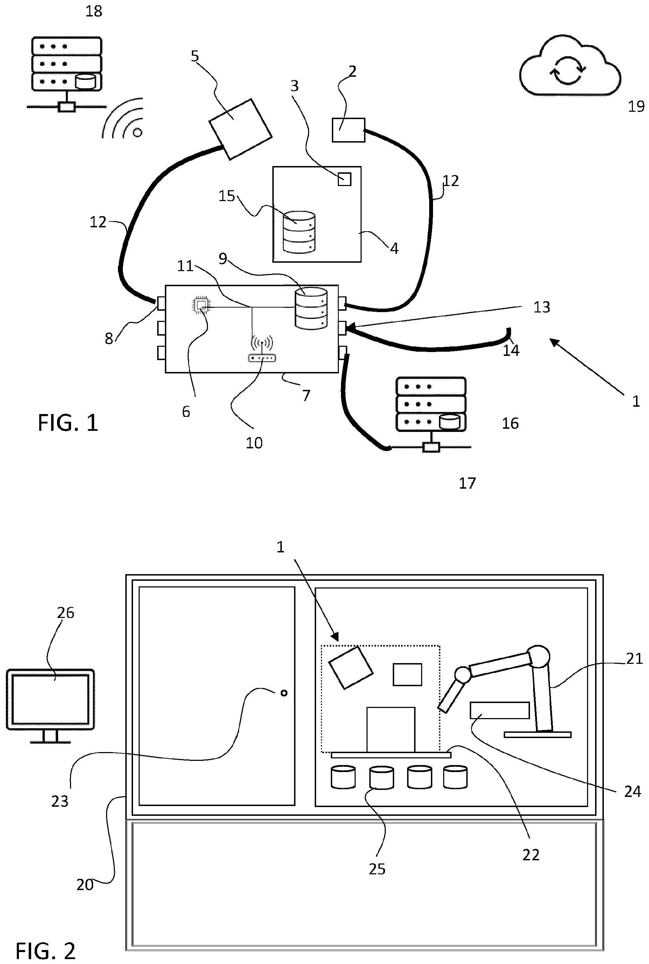

Figure 1 is a schematic diagram of an automated industrial electrical product condition monitoring system in accordance with embodiments of the present invention. The automated industrial electrical product condition monitoring system 1 comprises a data input device 2 that is adapted to read a digital identity credential 3 affixed to an industrial electrical product 4. An inspection device 5 is positioned to be able to inspect the physical characteristics of the industrial electrical product 4, with both the data input device 2 and the inspection device 5 being connected to a processor 6 within a housing 7, which is also provided with a number of I/O ports 8, a storage device 9, a wireless adapter 10 (this may be omitted depending upon the method used to inspect the industrial electrical product 4) and a main data bus 11 connecting the various components together. In this example, the data input device 2 and the inspection device 5 are physically connected to the processor 6 by means of a data bus 12, but may alternatively be connected wirelessly using the wireless adapter 10. In this embodiment, a data output device 13 is provided in the form of a data bus 14, but may also alternatively be the wireless adapter 10. Each of these components will now be discussed in more detail.

The digital identity credential 3 acts as a digital passport (DPP). Status data relating to the industrial electrical product 4 may be stored in a data store 15 located within the industrial electrical product 4 itself, in which case, the inspection device 5 may be further adapted to read the data store. Alternatively, the data store may be a database 16 in which all status data relating to the industrial electrical product 4 is stored. The database may be hosted on a local server 17, a remote networked server 18 or a cloud-based server 19, and stores the status data by digital identity credential 3. Status data includes any data relating to the product lifecycle management (PLM) of the industrial electrical product 4, such as bills of materials (BOM) relating to the components forming the industrial electrical product 4, computer-aided models CAx (such as CAD - computer-aided design, CAM - computer-aided manufacturing, and CAE - computer-aided engineering) associated with both the industrial electrical product 4 and its components, details of expected component, material and product lifetimes, allowed limits of wear and component age. The digital identity credential 3 itself may an optical or other-machine readable indicia, for example, a 1-D barcode, 2-D matrix code or QR code, a character string, an image, an RFID (radio-frequency ID) device, NFC (near-field communication) device or other electronically readable device. In the examples below a 2-D matrix code is used, but this is purely for illustrative purposes. The digital identity credential 3 stores unique identification data for the industrial electrical product 4, such as a serial number, which is stored in a read-only format. Any alteration of the digital identity credential 3 will cause it to become null and void. This therefore creates a permanent identity for the industrial electrical product 4 that the digital identity credential 3 is affixed to. To reduce the likelihood of alteration, the digital identity credential 3 may be tamperproof or hidden from view within the housing 7, or duplicated within the industrial electronic product. Depending on the type of digital identity credential 3 in use, the data input device may be a vision inspection system including a camera such as a CCD (charge coupled device) or CMOS (compound metal oxide semiconductor device) camera, and/or an RFID reader, NFC reader or other electronic data reader.

The inspection device 5 is adapted to obtain data relating to measurements of physical characteristics indicating the operating history and current function of the industrial electrical product. Data relating to the physical characteristics of the industrial electrical product 4 falls into two main categories: data that has been recorded during the lifetime of the industrial electrical product 4 and data from a visual inspection of the industrial electrical product 4. During the lifetime of the industrial electrical product 4 operational data may be obtained from various sensors provided within the digital electronic product 4 or within the environment the industrial electrical product 4 is operated in and downloaded to a memory or storage device provided within the industrial electrical product 4. Such operational data includes information on the runtime of the components within the industrial electrical product 4 (including details of electrical signals, operating temperatures, overheats, high/low current or voltage alerts), operating temperatures, humidity of the operating environment, exposure to magnetic or electric fields or radiation, impact or other external force. In addition, data regarding the operation of individual components, errors, fault codes, restarts, and other reliability data may also be recorded. In assessing the current function of the industrial electrical product, it may be necessary to assess characteristics such as running a motor or performing earth bond tests, which may be done via interrogating the software that runs the industrial electrical product 4 to carry out certain function tests. For such operational data, the inspection device 5 is adapted to digitally interrogate software stored in the industrial electrical product 4, and may comprise includes a wireless interrogation unit (for example, comprising a power system, memory, microcontroller, wireless adapter, antenna and clock), a data bus adapted to be plugged into the industrial electronic product 4 and connect to the main data bus 11, or an NFC/RFID reader, depending on the data output available from the industrial electrical product 4. Visual inspection data indicates the actual condition of the industrial electrical product 4 at the time of condition monitoring, and may, for example be used to detect damage to the industrial electrical product 4 and/or any of its components. This may be done using a visual inspection system, and may be combined with the data input device 2. Alternatively, the inspection device 5 may be able to download the relevant data relating to physical characteristics indicating the operating

The processor 6 is adapted to perform several tasks to enable the overall condition of the industrial electrical product 4 to be output via the data output device 13. Firstly, the processor identifies the industrial electrical product 4 based on the digital identity credential 3 read by the data input device 2. It also searches for status information relating to the industrial electrical product and retrieves the status information for further processing. As outlined above, this data may be held in a data store 15 housed within the industrial electrical product or in a database 16, remote from the industrial electrical product in which status data is stored by digital identity credential. The processor also simulates the industrial electrical product based on the status information and the data relating to the measured physical characteristics. This is done using a digital twin. A digital twin is a r a digital representation of a physical system, created using sensor data from the twinned physical system, CAx software that simulates the twinned system and processes the sensor data to recreate the twinned physical system virtually. This can then be used to explore the twinned physical system, such as investigating issues, performance and condition. In the embodiments of the present invention, a digital twin of the industrial electrical product 4 is created to determine the condition of both the industrial electrical product 4 and its components, in relation to recycling, reuse (such as repair or remanufacture), refurbishment, maintenance and disposal. The digital twin comprises CAx models and simulations generated in earlier stages of the industrial electrical product's lifecycle. For example, information regarding the temperature or current at locations within the industrial electrical product may be known due to sensor readings in use. By feeding those known values as inputs into the thermal and electrical models from the design stage, it is possible to evaluate the temperatures of other components of the industrial electrical product and therefore evaluate how their lifetime was impacted. The condition is then used as the basis of a targeted automated disassembly system and method for disassembling the industrial electrical product 4. The condition based on the simulation is output to a predetermined destination that may be a user display and/or form the basis of executable code to operate a robot to disassemble the industrial electrical product 4.

Figure 2 is a schematic illustration of an automated industrial electrical product disassembly system in accordance with the embodiments of the present invention. The automated industrial electrical product condition monitoring system of Figure 1 is housed within a cell 20. A flexible automation system, such as a robot 21 is positioned to receive an industrial electrical product 4 in the cell 20 on a platform 22. This may be done by manually placing an industrial electrical product 4 within the cell via a hinged door 23 or via a conveyor with a dedicated opening (not shown). A tool rack 24 is provided to hold tools required by the robot 21 to disassemble the industrial electrical product 4. A number of bins 25 are placed adjacent to the platform 22 to receive components removed from the industrial electrical product 4 by the robot 21. The contents of these bins 25 are then either reused, recycled, refurbished or disposed of as required. A user display 26 is provided outside of the cell 20 to enable a user to interrogate the condition of the industrial electrical product 4 and monitor its disassembly.

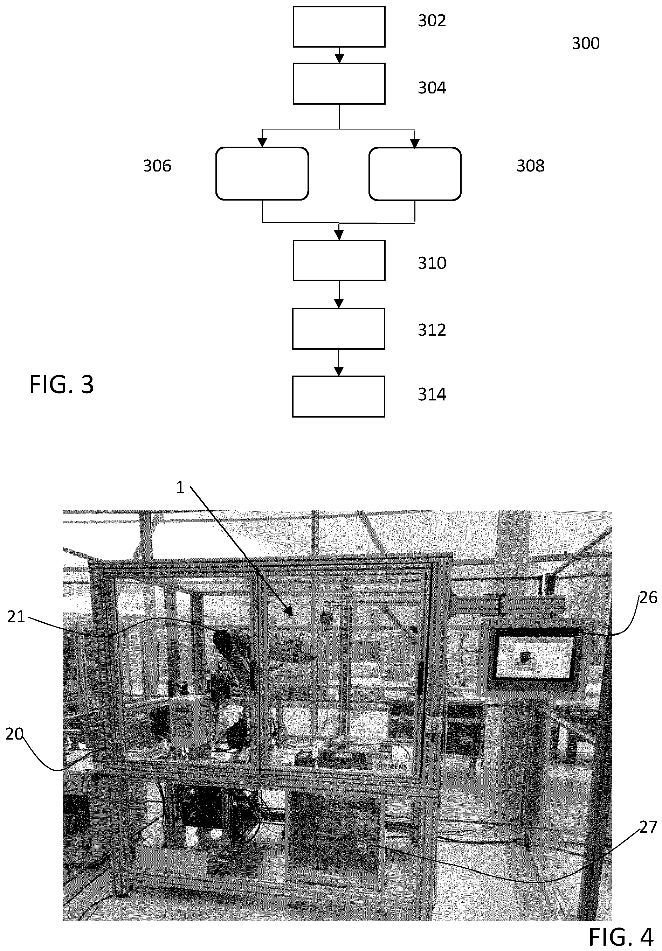

Figure 3 is a flowchart outlining the steps in a method in accordance with the embodiments of the present invention. The automated method of disassembling an industrial electrical product 300 starts at step 302, with reading a digital identity credential 3 affixed to an industrial electrical product 4. As outlined above, depending on the format of the digital identity credential 3, this may be done optically or electronically. Next, at step 304, the industrial electrical product 4 is inspected to obtain measurements of physical characteristics indicating the operating history and current function of the industrial electrical product. This may be done by digitally interrogating software stored on the industrial electrical product 4 either remotely or via a data bus, and/or by optical inspection. There are then two possibilities for how the method proceeds, depending on whether or not the status information for the industrial electrical product 4 is stored on a data store 15 located within the industrial electrical product 4, or remotely, in a database 16. At step 306, the inspection device reads the status information from the data store 15 located within the industrial electrical product 4. Alternatively, at step 308, the industrial digital product 4 is identified from the digital identity credential 3, and a database 16 containing status information for industrial electrical products 4 stored by digital identity credential 3 is searched for status information matching the industrial electrical product. This data is then retrieved for further processing. At step 310, based on the status information and the data regarding physical characteristics the industrial electrical product 4 is simulated. This is done by using a digital twin of the industrial electrical product 4 to model the likely physical condition of the components of the industrial electrical product 4. Once this is complete, at step 312 a condition of the industrial electrical product based on the simulation is output to a robot 21, and may be output in addition to a user display 26. Finally, at step 314, the industrial electrical product 4 is disassembled using the robot 21.

An example of the disassembly of an industrial electrical product 4 using the system and methods of the embodiments of the present invention will now be described. Figure 4 is a photograph of an automated industrial electrical product disassembly system in accordance with the embodiments of the present invention. The cell 20 contains both the robot 21 and the automated industrial electrical product 4 condition monitoring system 1. The user display 26 is also mounted outside of the cell 20. The processor 6 and associated components were provided in the form of a PC on which the machine vision and CAD models were run. A controller 27 for the robot 21 is mounted under the cell 20. In order to assess the system and methods of the embodiments of the present invention, a SINAMICS G120 Inverter (available at www.siemens.com) was chosen for automated disassembly. Siemens NX CAD models were used along with data available from existing PLM databases. The vision inspection system is available from Cognex (www.cognex.com/en-gb). In this example, status information was stored locally in a database 16.

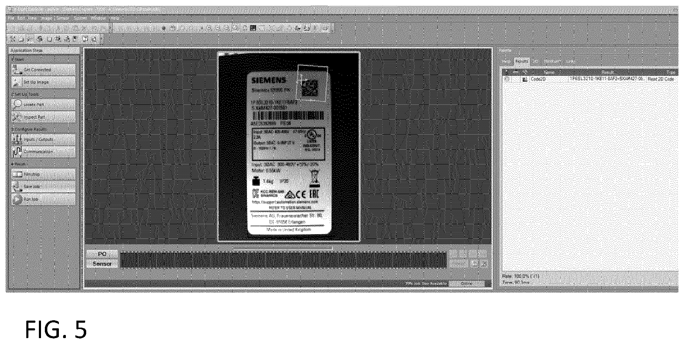

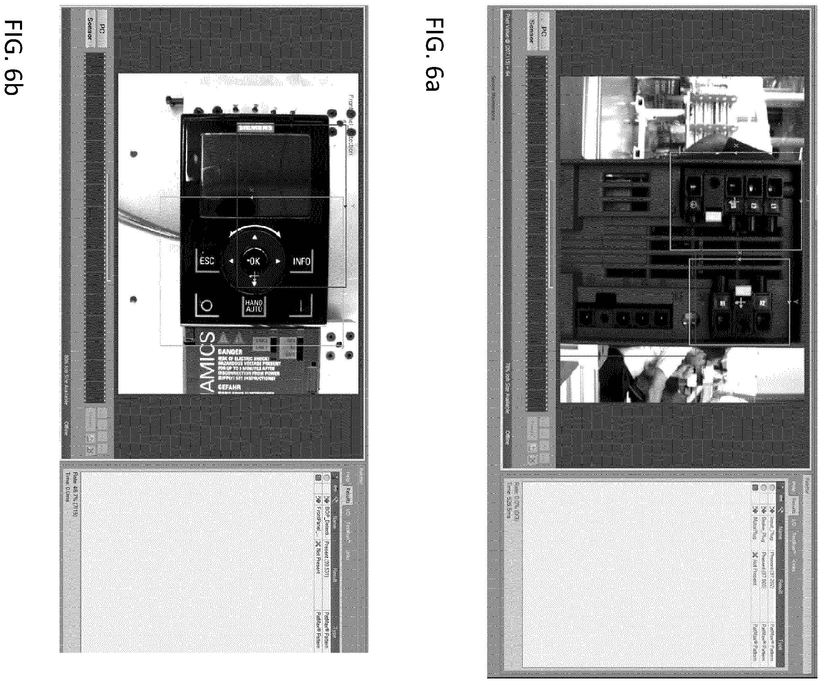

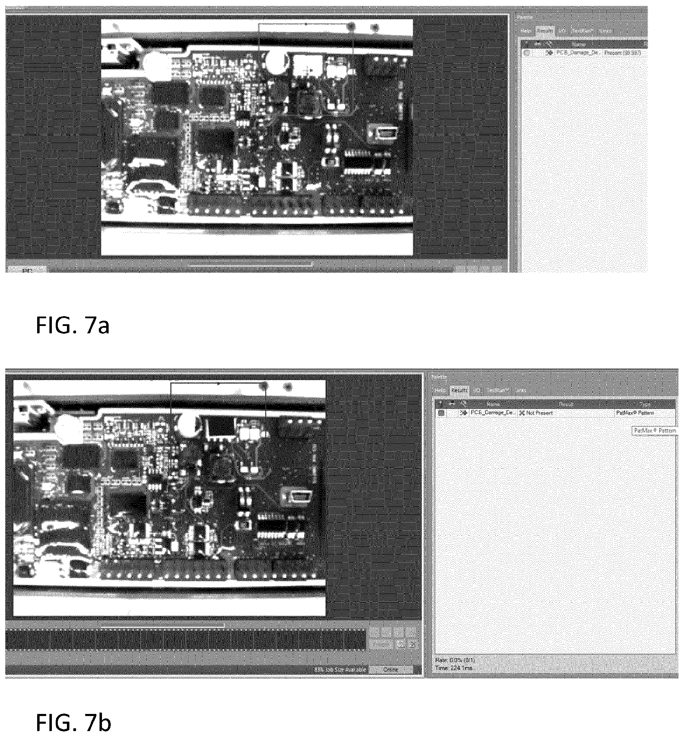

Figure 5 is a screenshot showing the initial reading of the digital identity credential. In this example, a QR code is used and read using a vision system, with a serial number 1P6SL3210-1KE14-3AP2 SXANN03-022374 output. Figures 6a and 6b are screenshots of the visual inspection of component presence. Figure 6a is a screenshot showing visual inspection of the industrial electrical product 4 for connectors (for input, motor and brake plug). Figure 6b is a screenshot showing visual inspection of the industrial electrical product 4 for the type of product (in this example the basic operator panel (BOP) and front panel). The user display on the right-hand side of each of Figures 6a and 6b indicates whether the component is present or not. In Figure 6a, whilst the visual inspection has identified the presence of the input and brake plugs, the motor plug is absent. In Figure 6b, the BOP is present but there is no front cover. Identifying the components that are not present allows disassembly steps associated with these components to be omitted from the overall disassembly process. Figures 7a and 7b are screenshots of the visual inspection of component damage. Figure 7a is a screenshot illustrating the presence of damage to a control PCB (printed circuit board), and Figure 7b illustrates a control PCB that is undamaged. In each example, the presence or absence of damage is indicated to the user on the right-hand side of the screen.

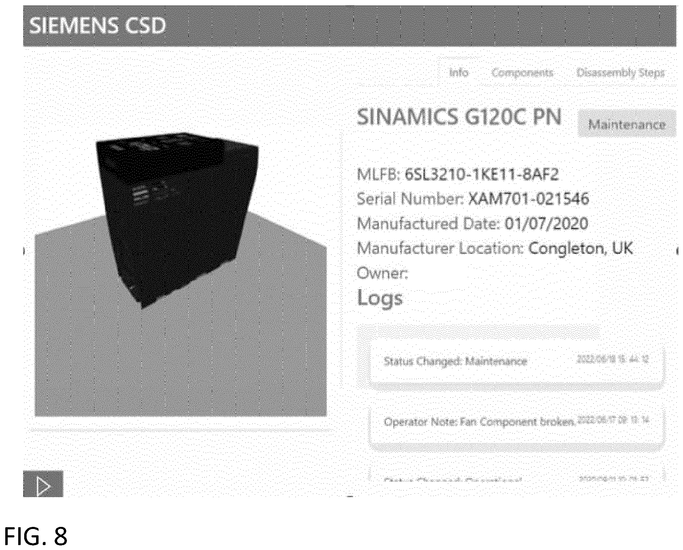

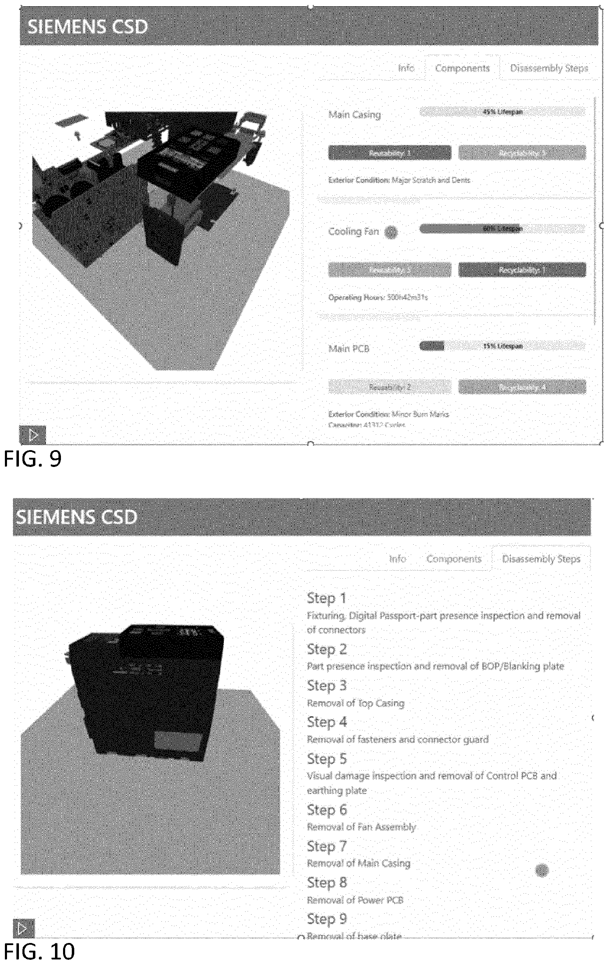

Figure 8 is a first example screenshot of a user interface generated by the embodiments of the present invention. This illustrates how the digital twin of the industrial electrical product may be interrogated for information regarding components and disassembly. The product illustrated is a SINAMICS G120C PN inverter. The first tab marked "Info" shows the information obtained by reading the digital identity credential, and a CAD image of the product is displayed. The information is obtained from searching the PLM database, and illustrates manufacturing data, serial number, manufacturing date, manufacturer location and owner. Logs of previous inspections are also provided, and from the digital identity credential the status of the inverter as needing maintenance is also identified and highlighted. Figure 9 is a second example screenshot of a user interface generated by the embodiments of the present invention. This shows the data on the second tab relating to the components of the inverter. Each of these is identified by name and provided with a condition, colour-coded to indicate severity or other issues. The first element of the condition is an estimated lifespan of the component, and colour coded red (short lifespan remaining), amber (acceptable but below 50% lifespan remaining) or blue (acceptable over 50% lifespan remaining). This may be calculated based upon the elapsed running time of a component compared with the manufacturers' indicated lifetime weighted in relation to any damage or runtime issues. Next, a score in relation to reusability and a score in relation to recyclability are given, again, colour-coded and rated on a scale of 1 to 5. The scores are based on the interrogation of the digital twin of the inverter, using information gathered from the PLM database and the inspection of the inverter. For example, rules relating to wear, damage and running time may be used to calculate the reusability of a component. Rules relating to the materials used in a component may be used to indicate the recyclability of a component. Finally, each entry for a component has space for additional comments, such as the exterior condition (in the case of the Main Casing), the operating hours (in the case of the cooling fan) and the appearance and electrical properties of components (in the case of the PCB). An exploded CAD drawing of the various components is also displayed. Figure 10 is a third example screenshot of a user interface generated by the embodiments of the present invention. This illustrates the third tab, which outlines the disassembly steps to be undertaken by the robot. These may be followed with animation of the CAD drawing in real time as the robot disassembles the inverter.

## Claims

1. An automated industrial electrical product condition monitoring system, comprising;
a data input device adapted to read a digital identity credential affixed to an industrial electrical product;
a data store containing status information for the industrial electrical product;
an inspection device adapted to obtain data from the industrial electrical product relating to measurements of physical characteristics indicating the operating history and current function of the industrial electrical product;
a processor adapted to identify the industrial electrical product based on the digital identity credential read by the data input device; to search for status information relating to the industrial electrical product and to retrieve the status information for further processing, and to simulate the industrial electrical product based on the status information and the data relating to the measured physical characteristics; and
a data output device adapted to output a condition of the industrial electrical product based on the simulation to a pre-determined destination.

2. Automated industrial electrical product condition monitoring system as claimed in claim 1, wherein the data input device is a vision inspection system.

3. Automated industrial electrical product condition monitoring system as claimed in claim 2, wherein the data input device and the inspection device are combined in the vision inspection system.

4. Automated industrial electrical product condition monitoring system as claimed in claim 1 or 2, wherein the inspection device is adapted to digitally interrogate software stored in the industrial electrical product.

5. Automated industrial electrical product condition monitoring system as claimed in any preceding claim, wherein the data store is a database located remote from the industrial electrical product in which status data relating to a plurality of industrial digital products is stored by digital identity credential.

6. Automated industrial electrical product condition monitoring system as claimed in any of claims 1 to 4, wherein the data store is located within the industrial electrical product and wherein the inspection device is further adapted to read the data store.

7. Automated industrial electrical product condition monitoring system as claimed in any preceding claim, wherein the processor is adapted to use a digital twin of the industrial electrical product to simulate the condition of the industrial electrical product.

8. Automated industrial electrical product condition monitoring system as claimed in any preceding claim, wherein the status information comprises at least one of: the expected lifetime of the components of the industrial electrical product, bill of materials information for components of the industrial electrical product, computer-aided models of the industrial electrical product, details of expected component, material and product lifetimes, and allowed limits of wear and component age.

9. Automated industrial electrical product condition monitoring system as claimed in any preceding claim, wherein the data indicating the operating history and current function of the industrial electrical product comprises at least one of: information on the runtime of the components within the industrial electrical product, operating temperatures, humidity of the operating environment, exposure to magnetic or electric fields or radiation, impact or other external forces, data regarding operation of individual components, errors, fault codes, and restarts.

10. An automated industrial electrical product disassembly system comprising the automated industrial electrical product condition monitoring system of any preceding claim and a flexible automation system adapted to be programmed to disassemble the industrial electrical product based on the condition of the industrial electrical product.

11. An automated method of disassembling an industrial electrical product, comprising:
a) reading a digital identity credential affixed to an industrial electrical product;
b) inspecting the industrial electrical product to obtain data relating to measurements of physical characteristics indicating the operating history of the industrial electrical product;
c) identifying, from a data store, the industrial electrical product based on the digital identity credential; searching for status information relating to the industrial electrical product and retrieving the status information for further processing;
d) simulating, based on the status information and the data relating to measurements of physical characteristics indicating the operating history of the industrial electrical product, the industrial electrical product;
e) outputting a condition of the industrial electrical product based on the simulation to a user display device and a flexible automation system; and
f) disassembling the industrial electrical product using the flexible automation system.

12. Method as claimed in claim 11, wherein the step of simulating comprises using a digital twin of the industrial electrical product.

13. Method as claimed in claim 11 or 12, wherein the condition of the industrial electrical product comprises, for each component of the industrial electrical product:
i) an estimated component lifespan;
ii) an indicator of the reusability of the component; and
iii) an indicator of the recyclability of the component.
and wherein the condition of the industrial electrical product further comprises a list of disassembly steps to be carried out by the flexible automation system and computer code to be executed to enable the flexible automation system to carry out the disassembly steps.

14. Method as claimed in claim 13, further comprising the step of displaying a computer-aided model of the industrial electrical product on the user display and animating the model to match the disassembly steps being carried out by the flexible automation system.

15. Method as claimed in any of claims 11 to 14, wherein the step of identifying the industrial electrical product based on the digital identity credential comprises either:
i) searching a database located remote from the industrial electrical product in which status data relating to a plurality of industrial digital products is stored by digital identity credential; or
ii) reading a data store located within the industrial electrical product.
